# EUROPEAN PATENT APPLICATION

(11) **EP 4 496 341 A1**
(43) Date of publication of application: **22.01.2025**
(21) Application number: 23791101.1
(22) Date of filing: 12.04.2023
(51) Int. Cl.: H04Q 11/00

(54) **SIGNAL TRANSMISSION METHOD, OPTICAL NETWORK UNIT, AND OPTICAL LINE TERMINAL**

(30) Priority: 19.04.2022 CN 202210409964
(71) Applicant: ZTE Corporation, Shenzhen, Guangdong 518057 (CN)
(72) Inventor: ZHANG, Weiliang, Shenzhen, Guangdong 518057 (CN); ZHANG, Haijun, Shenzhen, Guangdong 518057 (CN); YUAN, Liquan, Shenzhen, Guangdong 518057 (CN)
(74) Representative: Betten & Resch
(86) International application number: PCT/CN2023/087880
(87) International publication number: WO 2023/202446

(57) **Abstract**

Embodiments of the present application provide a signal transmission method, an optical network unit (ONU), and an optical line terminal (OLT). The signal transmission method comprises: when a downlink signal of an OLT is not received, an ONU sends an uplink detection signal to the OLT, so that the OLT in a downlink signal off state receives the uplink detection signal, and then starts sending a downlink signal to the present ONU.

## Description

### CROSS-REFERENCE TO RELATED APPLICATION

This application is filed on the basis of Chinese patent application No. 202210409964.6 filed April 19, 2022, and claims priority to the Chinese patent application, the entire contents of which are incorporated herein by reference.

### TECHNICAL FIELD

The present disclosure relates to the technical field of communication, and more particularly, to a signal transmission method, an Optical Network Unit (ONU), and an optical line terminal (OLT).

### BACKGROUND

With the application and advancement of Passive Optical Network (PON) technologies, Fibre To The Home (FTTH) has been introduced to provide fiber connections into homes. With the establishment of both domestic and international standards, Fiber To The Room (FTTR) has also been implemented. Currently, FTTR generally employs the same PON technology and system as FTTH, with the same standard, uplink and downlink wavelengths, protocol encapsulation and working mechanism, etc.

In practical applications, a Fiber To The Home Optical Network Unit (FTTH ONU) and a Fiber To The Room Optical Line Terminal (FTTR OLT) are usually integrated into a single device, known as a main gateway. The main gateway has an uplink optical port and a downlink optical port. When connected to an FTTH OLT through the uplink optical port, the main gateway works according to the FTTH ONU. When connected to an FTTR ONU through the downlink optical port, the main gateway works according to the FTTR OLT. However, this setup can lead to operational errors during deployment. For example, when the device is in use, the downlink optical port of the FTTR main gateway may mistakenly be connected to FTTH as the uplink optical port. In this case, the uplink wavelength of the FTTR main gateway is the same as the downlink wavelength of FTTH, thereby affecting the operation of the downlink wavelength of FTTH. This can result in data bit errors in the FTTH ONU, potentially causing the FTTH ONU to malfunction or go offline entirely.

### SUMMARY

Embodiments of the present disclosure provide a signal transmission method, an ONU, and an OLT.

The signal transmission method can avoid the impact on a downlink wavelength of an uplink PON of a main gateway when a downlink optical port of the main gateway is erroneously connected.

In accordance with a first aspect of the present disclosure, an embodiment provides a signal transmission method, applied to an ONU, the method including:
sending an uplink detection signal to an OLT in response to not receiving a downlink signal from the OLT.

In accordance with a second aspect of the present disclosure, an embodiment provides a signal transmission method, applied to an OLT, the method including:
maintaining a downlink signal disabled state after power on, until an uplink detection signal from an ONU is received; and
sending a downlink signal to the ONU in response to receiving the uplink detection signal from the ONU.

In accordance with a third aspect of the present disclosure, an embodiment provides an ONU, including:
a first sending module, configured for sending an uplink detection signal to an OLT in response to not receiving a downlink signal from the OLT.

In accordance with a fourth aspect of the present disclosure, an embodiment provides an OLT, including:
a second sending module, configured for maintaining a downlink signal disabled state after power on, until an uplink detection signal from an ONU is received; and sending a downlink signal to the ONU in response to receiving the uplink detection signal from the ONU.

In accordance with a fifth aspect of the present disclosure, an embodiment provides an optical network system, including an OLT and an ONU, where:
the ONU includes a first sending module, configured for sending an uplink detection signal to the OLT in response to not receiving a downlink signal from the OLT; and
the OLT includes a second sending module, configured for performing power on and detecting the uplink detection signal from the ONU; and sending a downlink signal to the ONU in response to receiving the uplink detection signal from the ONU.

In accordance with a sixth aspect of the present disclosure, an embodiment provides an ONU, including:
a processor and a memory,
where the memory stores a program instruction which, when executed by the processor, causes the processor to carry out the signal transmission method in accordance with the first aspect.

In accordance with a seventh aspect of the present disclosure, an embodiment provides an optical network system, including an OLT and an ONU, where:
the ONU includes a first sending module, configured for sending an uplink detection signal to the OLT in response to not receiving a downlink signal from the OLT; and
the OLT includes a second sending module, configured for performing power on and detecting the uplink detection signal from the ONU; and sending a downlink signal to the ONU in response to receiving the uplink detection signal from the ONU.

In accordance with an eighth aspect of the present disclosure, an embodiment provides an OLT, including:
a processor and a memory,
where the memory stores program instructions which, when executed by the processor, cause the processor to carry out the signal transmission method in accordance with the second aspect.

In accordance with a ninth aspect of the present disclosure, an embodiment provides a computer-readable storage medium, storing program instructions which, when executed by a computer, cause the computer to carry out the signal transmission method in accordance with the first aspect or the signal transmission method in accordance with the second aspect.

In the embodiments of the present disclosure, when an ONU does not receive a downlink signal from an OLT after being powered on, the ONU sends an uplink detection signal to the OLT, such that the OLT in a downlink signal disabled state starts to send the downlink signal to the ONU after receiving the uplink detection signal. In the embodiments of the present disclosure, after being powered on, the OLT first disables downlink signal sending, i.e., does not send a downlink signal to the ONU before receiving the uplink detection signal sent by the ONU. In this way, the power consumption of the device in the PON can be effectively reduced. By giving the ONU an active status to send the uplink detection signal to the OLT, the impact on the downlink wavelength of the uplink PON of the main gateway when the downlink optical port of the main gateway is erroneously connected can be effectively avoided.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram showing connection of a main gateway with ONUs and an OLT in a practical application;
FIG. 2 is a first schematic diagram showing interaction in a signal transmission method according to an embodiment of the present disclosure;
FIG. 3 is a schematic flowchart of steps in a conventional activation process between an ONU and an OLT;
FIG. 4 is a schematic flowchart of steps in an activation process based on a conventional activation process according to an embodiment of the present disclosure;
FIG. 5 is a schematic flowchart of a signal transmission method applied to an OLT according to an embodiment of the present disclosure;
FIG. 6 is a second schematic diagram showing interaction in a signal transmission method according to an embodiment of the present disclosure;
FIG. 7 is a third schematic diagram showing interaction in a signal transmission method according to an embodiment of the present disclosure;
FIG. 8 is a fourth schematic diagram showing interaction in a signal transmission method according to an embodiment of the present disclosure;
FIG. 9 is a fifth schematic diagram showing interaction in a signal transmission method according to an embodiment of the present disclosure;
FIG. 10 is a schematic structural diagram of an ONU according to an embodiment of the present disclosure; and
FIG. 11 is a schematic structural diagram of an OLT according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be understood that in the description of the embodiments of the present disclosure, the terms such as "first", "second" and the like used herein are merely used for distinguishing technical features, and are not intended to indicate or imply relative importance, or implicitly point out the number of the indicated technical features, or implicitly point out a precedence order of the indicated technical features. The term "at least one" means one or more, and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b, and c may represent a, b, c, "a and b", "a and c", "b and c", or "a, b, and c", where a, b, and c may be singular or plural.

In addition, the technical features involved in various embodiments of the present disclosure described below can be combined with each other if not in collision.

With the application and development of PON technologies, FTTH has been developed to provide fiber connections into homes. With the standardization of domestic and international standards, FTTR has been realized. At present, FTTR generally adopts the same PON technology and system as FTTH, with the same standard, uplink and downlink wavelengths, protocol encapsulation and working mechanism, etc.

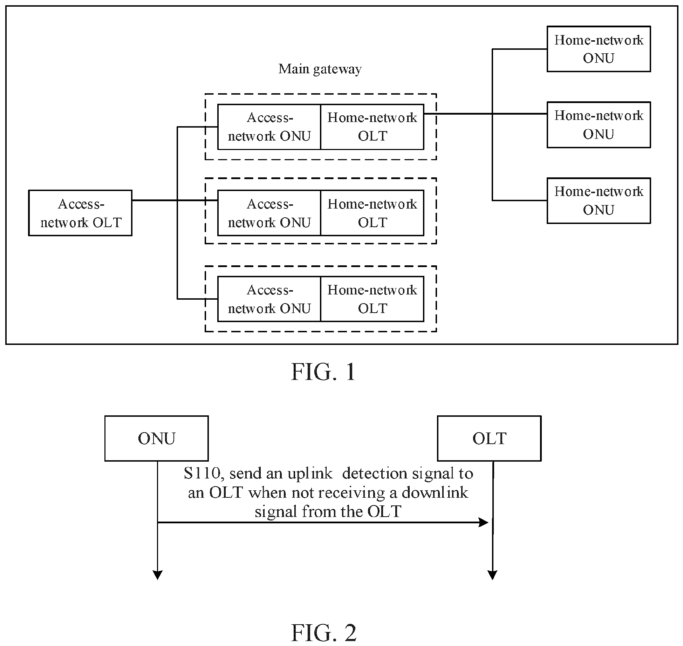

In practical applications, an FTTH ONU and an FTTR OLT are usually integrated into one device, which is called a main gateway. As shown in FIG. 1, the main gateway has an uplink optical port and a downlink optical port. When connected to an access-network OLT through the uplink optical port, the main gateway works according to an access-network ONU. When connected to a home-network ONU through the downlink optical port, the main gateway works according to a home-network OLT. However, such an arrangement is likely to cause erroneous operations in actual deployment. For example, when the device is working, the downlink optical port of the FTTR main gateway is connected to FTTH as the uplink optical port. In this case, the uplink wavelength of the FTTR main gateway is the same as the downlink wavelength of FTTH, affecting the operation of the downlink wavelength of FTTH. As a result, bit errors occur in data received by the FTTH ONU, and even the FTTH ONU fails to work normally and goes offline.

Terms involved in the present disclosure are explained below.

FTTR: It refers to routing an optical fiber to a room, and is a basic technical method of optical fiber access. Corresponding optical fiber access methods include Fibre To The Build (FTTB), Fibre To The Curb (FTTC), Fibre To The Zone (FTTZ), and FTTH. A bus, ring, star, or tree topology may be used for routing.

PON: It is a point-to-multipoint optical fiber transmission and access technology, which adopts broadcasting in downlink and adopts Time Division Multiple Access (TDMA) in uplink. It can flexibly form a tree, star, bus, or other topological structures and has the advantages of optical cable resource saving, bandwidth resource sharing, reduced investments on equipment rooms, fast network construction, and low network construction costs.

OLT: It is a core component of an optical access network, is equivalent to a switch or router in a conventional communication network, and is also a multi-service provisioning platform. It is generally used to provide optical fiber interfaces for user-oriented passive optical fiber networks. Its functions include: connecting to an upper-layer network in uplink direction to complete uplink access to a PON, and connecting to a user-side device ONU in a downlink direction through an Optical Distribution Network (ODN), to realize the control, management and ranging functions of the user-side device ONU.

ONU: ONUs are classified into active ONUs and passive ONUs. Generally, a device equipped with an optical receiver, an uplink optical transmitter, and multiple bridge amplifiers for network monitoring is called an optical node. A PON is connected to an OLT through a single optical fiber, and then the OLT is connected to an ONU. The ONU provides data, interactive personality television (IPTV), voice, and other services.

Physical Layer Operation Administration and Maintenance (PLOAM) message: A PLOAM message may be broadcast or unicast. Main functions provided by the message include: uplink burst configuration, ONU activation, ONU registration, cipher key update, exchange of protection switch signals, power management, etc.

To address the above problems, the embodiments of the present disclosure provide a signal transmission method, an ONU, and an OLT. The signal transmission method can avoid the impact on a downlink wavelength of FTTH when a downlink optical port of an FTTR main gateway is erroneously connected.

The embodiments described in the present disclosure may be implemented in a communication system, e.g., in at least one of the following systems: a Global System for Mobile Communications (GSM) or any other second generation (2G) cellular communication system, a third-generation (3G) Universal Mobile Telecommunications System (UMTS) system based on basic Wideband Code Division Multiple Access (W-CDMA), a High Speed Packet Access (HSPA) system, a Long Term Evolution (LTE) system, an Advanced LTE system, an IEEE 802.11-based system, an IEEE 802.15-based system and/or a fifth-generation (5G) mobile or cellular communication system, and future mobile communication systems. However, the embodiments are not limited to the systems given by the above examples, and those having ordinary skills in the art can apply the present scheme to other communication systems having necessary attributes.

FIG. 2 is a schematic flowchart of a signal transmission method applied to an ONU according to an embodiment of the present disclosure. An implementation process of the method applied to the ONU includes, but not limited to, a following step S110.

At S110, an uplink detection signal is sent to an OLT when not receiving a downlink signal from the OLT.

It can be understood that different from a conventional PON in which the OLT may emit light and send a downlink frame upon being powered on and the ONU emits light and sends an uplink frame only under the instruction of the OLT, in the signal transmission method described in the embodiment of the present disclosure, the ONU is given an active status in the PON in the initial stage. First, it is determined whether the ONU has received a downlink signal sent by the OLT. If not, the ONU attempts to perform brief signal sending, to be specific, the ONU first sends an uplink detection signal to the OLT.

It should be noted that the signal transmission method applied to the ONU in the embodiment of the present disclosure may be applied to a network activation process executed by the ONU and the OLT. To be specific, when the ONU does not receive a downlink signal from the OLT after being powered on, the ONU sends an uplink detection signal to the OLT, such that the OLT in a downlink signal disabled state starts to send the downlink signal to the ONU after receiving the uplink detection signal. In this way, the impact on the downlink wavelength of the uplink PON of the main gateway when the downlink optical port of the main gateway is erroneously connected can be avoided. After the activation process, the OLT and the ONU follow a conventional communication process, i.e., the OLT sends a downlink signal to the ONU, and the ONU sends an uplink signal under the control of the OLT.

It should be noted that in the embodiment of the present disclosure, in the initial stage of the activation process executed by the ONU and the OLT, the OLT and the ONU do not interact with each other, and the ONU has not acquired a downlink clock from the OLT. When the ONU does not receive the downlink signal from the OLT, the ONU sends the uplink detection signal to the OLT by using a local clock.

It should be noted that the uplink detection signal sent by the ONU may use a default guard time, preamble, delimiter, and other parameters, and the OLT may also use the default guard time, preamble, delimiter, and other parameters to restore and read the uplink detection signal. However, the present disclosure is not limited to using only the default parameters of the uplink detection signal.

In some embodiments, the process of sending, by the ONU, an uplink detection signal to an OLT includes: sending the uplink detection signal to the OLT when not receiving the downlink signal from the OLT within a first time period after the ONU is powered on.

It should be noted that the length of the first time period is not particularly limited, and may be set according to actual needs.

It can be understood that the signal transmission method of the embodiment of the present disclosure may also be applied to both a network activation process and a subsequent communication process executed by the ONU and the OLT. To be specific, when the ONU has not received a downlink signal from the OLT after being powered on, the ONU sends an uplink detection signal to the OLT, when the ONU does not receive the downlink signal from the OLT within a first time period after the ONU is powered on, the ONU sends an uplink detection signal to the OLT, such that the OLT in a downlink signal disabled state starts to send the downlink signal to the ONU after receiving the uplink detection signal. In the embodiment of the present disclosure, by giving the ONU an active status to send the uplink detection signal to the OLT, the impact on the downlink wavelength of the uplink PON of the main gateway when the downlink optical port of the main gateway is erroneously connected can be effectively avoided.

It can be understood that in practical applications, in a case where an OLT is connected to a plurality of ONUs, when one ONU does not receive a downlink signal from the OLT within the first time period after being powered on, the other ONUs cannot receive the downlink signal sent by the OLT either, i.e., the plurality of ONUs connected to the OLT are independent of each other and do not affect each other.

In some embodiments, the implementation process of the signal transmission method applied to the ONU in the embodiment of the present disclosure further includes, but not limited to, the following steps S120 and S130.

At S120, the sending of the uplink detection signal to the OLT is canceled when receiving the downlink signal from the OLT within the first time period after the ONU is powered on.

It should be noted that the signal transmission method applied to the ONU in the embodiment of the present disclosure may be applied to a network activation process executed by the ONU and the OLT. To be specific, when the ONU does not receive a downlink signal from the OLT after being powered on, the ONU sends an uplink detection signal to the OLT, such that the OLT in a downlink signal disabled state starts to send the downlink signal to the ONU after receiving the uplink detection signal. When the ONU receives the downlink signal from the OLT within the first time period after being powered on, the ONU cancels the sending of the uplink detection signal to the OLT. After the activation is completed, the OLT and the ONU follow a conventional communication process, i.e., the OLT sends the downlink signal to the ONU, and the ONU sends the uplink detection signal under the control of the OLT. In this way, the impact on the downlink wavelength of the uplink PON of the main gateway when the downlink optical port of the main gateway is erroneously connected can be avoided.

At S130, the downlink signal from the OLT is detected for within the first time period after the ONU is powered on, where the downlink signal includes at least one of: a downlink frame and a downlink optical signal.

It can be understood that when the ONU does not receive the downlink signal from the OLT after being powered on, the ONU sends the uplink detection signal to the OLT, such that the OLT in the downlink signal disabled state starts to send the downlink signal to the ONU after receiving the uplink detection signal. The ONU detects the downlink signal from the OLT within the first time period after being powered on. When receiving the downlink frame and/or the downlink optical signal from the OLT, the ONU cancels the sending of the uplink detection signal to the OLT. Then, the OLT and the ONU follow a conventional communication process, i.e., the OLT sends the downlink signal to the ONU, and the ONU sends the uplink signal under the control of the OLT. In this way, the impact on the downlink wavelength of the uplink PON of the main gateway when the downlink optical port of the main gateway is erroneously connected can be avoided.

It should be noted that the downlink frame sent by the OLT to the ONU includes: a downlink superframe, a quiet window, etc. The downlink optical signal sent by the OLT to the ONU includes a Serial Number (SN) request message, etc. After the OLT sends the downlink frame and/or the downlink optical signal or after the ONU receives the downlink frame and/or the downlink optical signal from the OLT, a conventional activation process is implemented between the OLT and the ONU to activate the ONU. After the ONU is successfully activated, the OLT sends the downlink signal to the ONU, and the ONU sends the uplink detection signal under the control of the OLT.

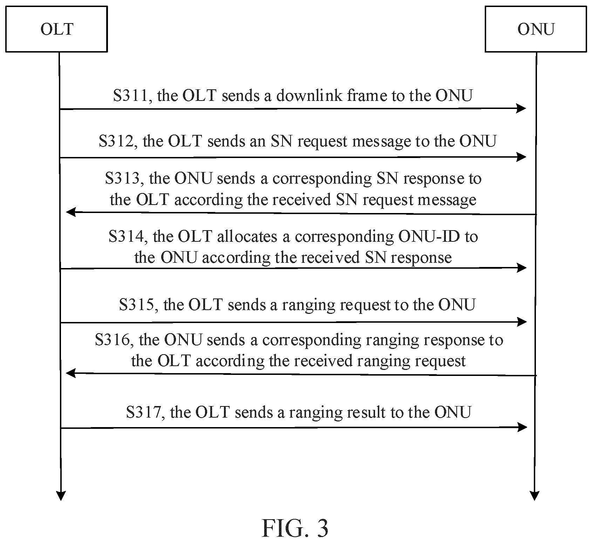

It should be noted that in a conventional PON, the ONU is in a passive status, i.e., the OLT sends the downlink optical signal and/or the downlink frame to the ONU upon being powered on, and the ONU sends a corresponding uplink optical signal and/or uplink frame only under the control of an indication from the OLT. As shown in FIG. 3, a conventional activation process between an ONU and an OLT includes, but not limited to, the following steps S311 to S317.

At S311, the OLT sends a downlink frame to the ONU.

At S312, the OLT sends an SN request message to the ONU.

At S313, the ONU sends a corresponding SN response to the OLT according the received SN request message.

At S314, the OLT allocates a corresponding ONU-ID to the ONU according the received SN response.

At S315, the OLT sends a ranging request to the ONU.

At S316, the ONU sends a corresponding ranging response to the OLT according the received ranging request.

At S317, the OLT sends a ranging result to the ONU.

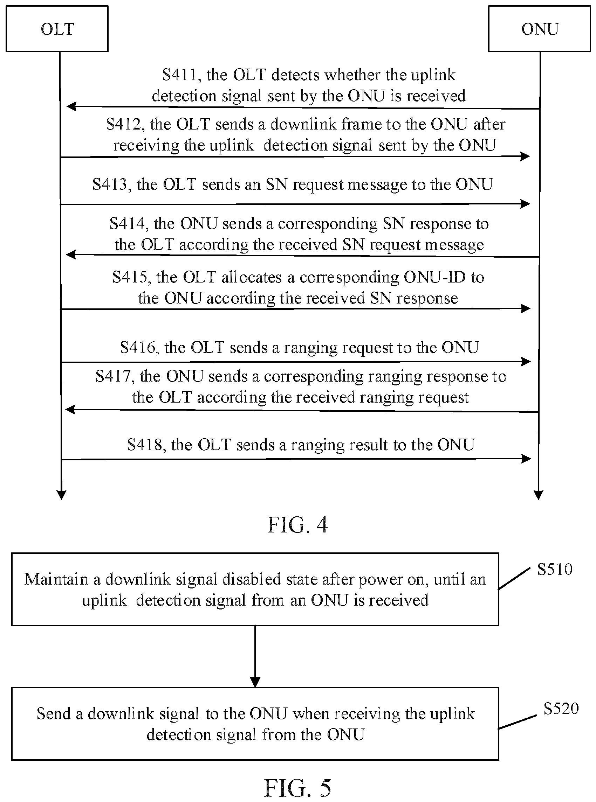

It is to be noted that, as shown in FIG. 4, to avoid the impact on the downlink wavelength of the uplink PON of the main gateway when the downlink optical port of the main gateway is erroneously connected, in the embodiment of the present disclosure, before the conventional activation process, the OLT, after being powered on, first detects whether the uplink detection signal sent by the ONU is received. The specific activation process includes, but not limited to, the following steps S411 to S418.

At S411, the OLT detects whether the uplink detection signal sent by the ONU is received.

At S412, the OLT sends a downlink frame to the ONU after receiving the uplink detection signal sent by the ONU.

At S413, the OLT sends an SN request message to the ONU.

At S414, the ONU sends a corresponding SN response to the OLT according the received SN request message.

At S415, the OLT allocates a corresponding ONU-ID to the ONU according the received SN response.

At S416, the OLT sends a ranging request to the ONU.

At S417, the ONU sends a corresponding ranging response to the OLT according the received ranging request.

At S418, the OLT sends a ranging result to the ONU.

It should be noted that when none of the ONUs connected to the OLT is working or all the ONUs enter an energy-saving state, the OLT also stops working or enters the energy-saving state, and stops sending the downlink signal. In this case, both the OLT and the ONU enter an initial state. When the ONU resumes operation, the OLT, after being powered on, first detects whether the uplink detection signal sent by the ONU is received. When the ONU does not receive the downlink signal from the OLT after being powered on, the ONU sends the uplink detection signal to the OLT. After the ONU receives the downlink frame and/or the downlink optical signal from the OLT, a conventional activation process is implemented between the OLT and the ONU to activate the ONU. After the ONU is successfully activated, the OLT sends the downlink signal to the ONU, and the ONU sends the uplink detection signal under the control of the OLT.

In some embodiments, the process of detecting the downlink signal from the OLT within the first time period after the ONU is powered on may include: detecting the downlink frame from the OLT within the first time period after the ONU is powered on, and when the downlink frame from the OLT is detected, determining that the downlink signal from the OLT has been received within the first time period after the ONU is powered on.

It can be understood that when the ONU does not receive the downlink signal from the OLT after being powered on, the ONU detects the downlink frame from the OLT within the first time period after the ONU is powered on, and when the downlink frame from the OLT is detected, the ONU determines that it receives the downlink signal from the OLT within the first time period after the ONU is powered on, and cancels the sending of the uplink detection signal to the OLT.

In some embodiments, the process of detecting the downlink signal from the OLT within the first time period after the ONU is powered on may further include: detecting an Signal Detect (SD) signal within the first time period after the ONU is powered on, and when the SD signal is detected, determining that the downlink signal from the OLT has been received within the first time period after the ONU is powered on, where the SD signal is generated by the ONU after receiving a downlink optical signal from the OLT.

It can be understood that when the ONU does not receive the downlink signal from the OLT after being powered on, the ONU detects, within the first time period after the ONU is powered on, whether the downlink optical signal from the OLT generates an SD signal, and when detecting the SD signal, the ONU determines that it receives the downlink signal from the OLT within the first time period after the ONU is powered on, and cancels the sending of the uplink detection signal to the OLT.

In some embodiments, when the ONU receives the downlink signal from the OLT within the first time period after being powered on, the signal transmission method provided by the embodiment of the present disclosure further includes, but not limited to, at least one of:
receiving a bandwidth allocation message sent by the OLT;
receiving a PLOAM message sent by the OLT; and
receiving an SN request message sent by the OLT.

It can be understood that when the ONU does not receive the downlink signal from the OLT within the first time period after being powered on, the ONU sends the uplink detection signal to the OLT. The received downlink signal from the OLT may be a bandwidth allocation message sent by the OLT, and/or a PLOAM message sent by the OLT, and/or an SN request message sent by the OLT. After it is determined that the downlink signal from the OLT has been received within the first time period after the ONU is powered on, the OLT sends a downlink signal to the ONU, and the ONU sends an uplink signal under the control of the OLT.

It should be noted that the uplink detection signal sent by the ONU may be a known PLOAM message or a newly defined PLOAM message.

In some embodiments, in the signal transmission method applied to the ONU in the embodiment of the present disclosure, the uplink detection signal includes at least one of: an uplink frame and an uplink optical signal.

It can be understood that when the ONU does not receive the downlink signal from the OLT after being powered on, the ONU sends the uplink frame and/or the uplink optical signal to the OLT, and when receiving the downlink signal from the OLT within the first time period after the ONU is powered on, the ONU cancels the sending of the uplink frame and/or the uplink optical signal to the OLT. Then, the OLT and the ONU follow a conventional communication process, i.e., the OLT sends the downlink signal to the ONU, and the ONU sends the uplink frame and/or the uplink optical signal under the control of the OLT. In this way, the impact on the downlink wavelength of the uplink PON of the main gateway when the downlink optical port of the main gateway is erroneously connected can be avoided.

In some embodiments, after the uplink detection signal is sent to the OLT, the implementation process of the signal transmission method applied to the ONU in the embodiment of the present disclosure further includes, but not limited to, a following step S 140.

At S140, the sending of the uplink detection signal to the OLT is stopped when receiving the downlink signal sent by the OLT according to the uplink detection signal.

It can be understood that when the ONU does not receive the downlink signal from the OLT within a first time period after being powered on, the ONU sends the uplink detection signal to the OLT, and when the ONU receives the downlink signal sent by the OLT according to the uplink detection signal, the ONU stops the sending of the uplink detection signal to the OLT, and a conventional activation process is executed. After the activation is completed, the OLT and the ONU follow a conventional communication process, i.e., the OLT sends the downlink signal to the ONU, and the ONU sends the uplink frame and/or the uplink optical signal under the control of the OLT. In this way, the impact on the downlink wavelength of the uplink PON of the main gateway when the downlink optical port of the main gateway is erroneously connected can be avoided.

In some embodiments, after the uplink detection signal is sent to the OLT, the implementation process of the signal transmission method applied to the ONU in the embodiment of the present disclosure further includes, but not limited to, a following step S 150.

At S150, the sending of the uplink detection signal to the OLT is continued when not receiving the downlink signal from the OLT within a second time period after the uplink detection signal is sent.

It can be understood that the signal transmission method applied to the ONU in the embodiment of the present disclosure may be applied to the network activation process executed by the ONU and the OLT, and may also be applied on the basis of an existing activation mechanism. When the ONU does not receive the downlink signal from the OLT within the first time period after being powered on, the ONU sends the uplink detection signal to the OLT. Then, when the ONU does not receive the downlink signal from the OLT within the second time period after the uplink detection signal is sent, the ONU continues the sending of the uplink signal to the OLT; and continues to detect whether the ONU currently receives the downlink signal sent by the OLT, and does not stop the sending until the ONU receives the downlink signal sent by the OLT. In this case, the OLT sends the downlink signal to the ONU, and the ONU sends the uplink frame and/or the uplink optical signal under the control of the OLT. In this way, the impact on the downlink wavelength of the uplink PON of the main gateway when the downlink optical port of the main gateway is erroneously connected can be avoided.

It should be noted that the length of the second time period is not particularly limited, and may be set according to actual needs.

FIG. 5 is a schematic flowchart of a signal transmission method applied to an OLT according to an embodiment of the present disclosure. An implementation process of the method applied to the OLT includes, but not limited to, the following steps S510 and S520.

At S510, a downlink signal disabled state is maintained after power on, until an uplink detection signal from an ONU is received.

It can be understood that after being powered on, the OLT first maintains the downlink signal disabled state, and detects whether the current OLT receives the uplink detection signal from the ONU. When the OLT does not receive the uplink detection signal from the ONU, sending of the downlink signal by the OLT is disabled all the time, until the OLT receives the uplink detection signal from the ONU.

At S520, a downlink signal is sent to the ONU when receiving the uplink detection signal from the ONU.

It can be understood that when the OLT detects that it receives the uplink detection signal from the ONU, the OLT enables the function of sending the downlink signal to the ONU, and sends the downlink signal to the ONU. The ONU sends the uplink optical signal under the control of the OLT. In this way, the impact on the downlink wavelength of the uplink PON of the main gateway when the downlink optical port of the main gateway is erroneously connected can be avoided.

It should be noted that the downlink signal sent by the OLT to the ONU includes a downlink frame and/or a downlink optical signal. The downlink frame includes: a downlink superframe, an SN request message. The downlink optical signal may be an optical signal having no special meaning. After the ONU receives the downlink frame and/or the downlink optical signal from the OLT, a conventional activation process is implemented to activate the ONU. After the ONU is successfully activated, the OLT sends the downlink signal to the ONU, and the ONU sends the uplink signal under the control of the OLT.

In some embodiments, in the signal transmission method applied to the OLT in the embodiment of the present disclosure, the uplink detection signal includes at least one of: an uplink frame and an uplink optical signal.

It can be understood that after being powered on, the OLT first maintains the downlink signal disabled state, and detects whether the OLT currently receives the uplink frame and/or the uplink optical signal from the ONU. When the OLT does not receive the uplink frame and/or the uplink optical signal from the ONU, sending of the downlink signal by the OLT is disabled all the time, until the OLT receives the uplink frame and/or the uplink optical signal from the ONU. Then, the OLT and the ONU follow a conventional communication process, i.e., the OLT sends the downlink signal to the ONU, and the ONU sends the uplink frame and/or the uplink optical signal under the control of the OLT. In this way, the impact on the downlink wavelength of the uplink PON of the main gateway when the downlink optical port of the main gateway is erroneously connected can be avoided.

In some embodiments, the implementation process of the signal transmission method applied to the OLT in the embodiment of the present disclosure further includes, but not limited to, the following steps S530 and S540.

At S530, an uplink frame from the ONU is detected, and when detecting the uplink frame from the ONU, it is determined that the uplink detection signal from the ONU has been received.

It can be understood that c, the OLT maintains the downlink signal disabled state, and detects whether the OLT currently receives the uplink detection signal from the ONU. When detecting the uplink frame of the ONU, the OLT determines that it receives the uplink detection signal from the ONU, and starts to send the downlink signal to the ONU. Then, after the OLT and the ONU are activated using the conventional activation process, the OLT and the ONU follow a conventional communication process, i.e., the OLT sends the downlink signal to the ONU, and the ONU sends the uplink detection signal under the control of the OLT. In this way, the impact on the downlink wavelength of the uplink PON of the main gateway when the downlink optical port of the main gateway is erroneously connected can be avoided.

At S540, an SD signal is detected, and when the SD signal is detected, it is determined that the uplink detection signal from the ONU has been received, where the SD signal is generated by the OLT after receiving an uplink optical signal from the ONU.

It can be understood that upon being powered on, the OLT maintains the downlink signal disabled state, and detects whether the OLT currently receives the SD signal generated by the uplink detection signal from the ONU. When detecting the SD signal, the OLT determines that it receives the uplink detection signal from the ONU, and starts to send the downlink signal to the ONU. Then, after the OLT and the ONU are activated using the conventional activation process, the OLT and the ONU follow a conventional communication process, i.e., the OLT sends the downlink signal to the ONU, and the ONU sends the uplink signal under the control of the OLT. In this way, the impact on the downlink wavelength of the uplink PON of the main gateway when the downlink optical port of the main gateway is erroneously connected can be avoided.

In some embodiments, when the ONU receives the downlink signal from the OLT within the first time period after being powered on, the signal transmission method provided by the embodiment of the present disclosure further includes, but not limited to, at least one of:
In some embodiments, the sending of the downlink signal to the ONU by the OLT when receiving the uplink detection signal from the ONU includes, but not limited to, at least one of:
sending a downlink frame to the ONU;
sending a downlink optical signal to the ONU;
sending a bandwidth allocation message to the ONU;
sending a PLOAM message to the ONU; and
sending an SN request message to the ONU.

It can be understood that after being powered on, the OLT first maintains the downlink signal disabled state, and detects whether the current OLT receives the uplink detection signal from the ONU. When the OLT does not receive the uplink detection signal from the ONU, sending of the downlink signal by the OLT is disabled all the time, until the OLT receives the uplink detection signal from the ONU. When detecting that the OLT receives the uplink detection signal from the ONU, the OLT enables the function of sending the downlink signal. The downlink signal sent by the OLT includes at least one of: a downlink frame, a downlink optical signal, a bandwidth allocation message, a PLOAM message, and an SN request message. The OLT sends the downlink signal to the ONU, and the ONU sends, under the control of the OLT, the uplink detection signal for network communication. In this way, the impact on the downlink wavelength of the uplink PON of the main gateway when the downlink optical port of the main gateway is erroneously connected can be avoided.

It should be noted that the PLOAM message sent by the OLT may be a known PLOAM message or a newly defined PLOAM message.

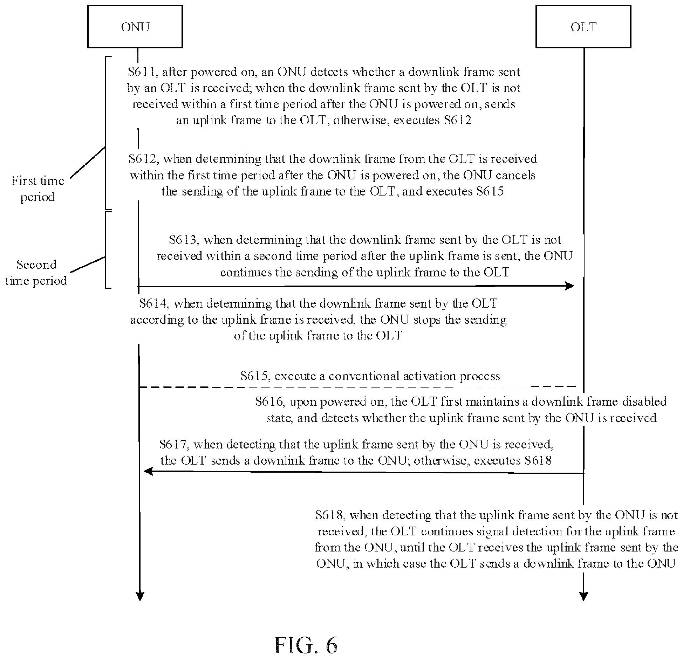

For example, referring to FIG. 6, a signal transmission method according to Embodiment One of the present disclosure includes the following steps S611 to S618.

At S611, after powered on, an ONU detects whether a downlink frame sent by an OLT is received; when the downlink frame sent by the OLT is not received within a first time period after the ONU is powered on, sends an uplink frame to the OLT; otherwise, executes S612.

At S612, when determining that the downlink frame from the OLT is received within the first time period after the ONU is powered on, the ONU cancels the sending of the uplink frame to the OLT, and executes S615.

At S613, when determining that the downlink frame sent by the OLT is not received within a second time period after the uplink frame is sent, the ONU continues the sending of the uplink frame to the OLT.

At S614, when determining that the downlink frame sent by the OLT according to the uplink frame is received, the ONU stops the sending of the uplink frame to the OLT.

At S615, a conventional activation process is executed.

At S616, upon being powered on, the OLT first maintains a downlink frame disabled state, and detects whether the uplink frame sent by the ONU is received.

At S617, when detecting that the uplink frame sent by the ONU is received, the OLT sends a downlink frame to the ONU; otherwise, executes S618.

At S618, when detecting that the uplink frame sent by the ONU is not received, the OLT continues signal detection for the uplink frame from the ONU, until the OLT receives the uplink frame sent by the ONU, in which case the OLT sends a downlink frame to the ONU.

It should be noted that when determining that the downlink frame sent by the OLT is not received within the second time period after the uplink frame is sent, the ONU continues the sending of the uplink frame to the OLT; and continues to detect whether the ONU currently receives the downlink frame sent by the OLT, and does not stop the sending of the uplink frame to the OLT until the ONU receives the downlink frame sent by the OLT.

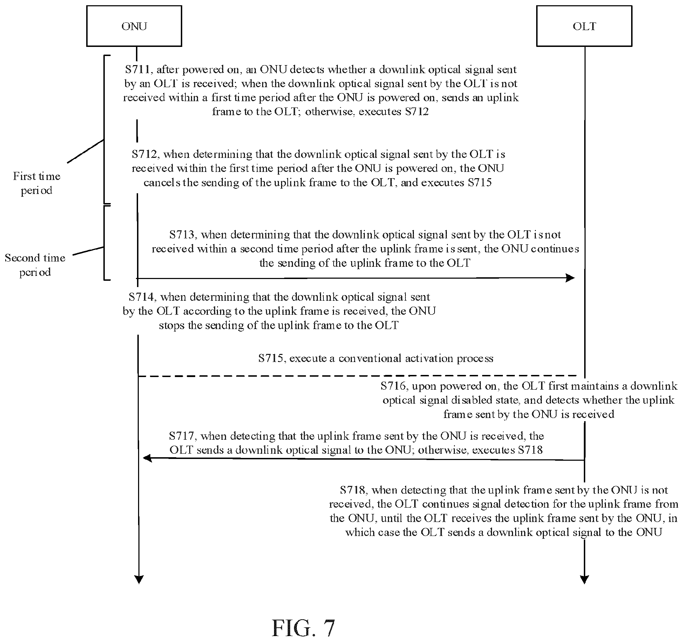

For example, referring to FIG. 7, a signal transmission method according to Embodiment Two of the present disclosure includes the following steps S711 to S718.

At S711, after powered on, an ONU detects whether a downlink optical signal sent by an OLT is received; when the downlink optical signal sent by the OLT is not received within a first time period after the ONU is powered on, sends an uplink frame to the OLT; otherwise, executes S712.

At S712, when determining that the downlink optical signal sent by the OLT is received within the first time period after the ONU is powered on, the ONU cancels the sending of the uplink frame to the OLT, and executes S715.

At S713, when determining that the downlink optical signal sent by the OLT is not received within a second time period after the uplink frame is sent, the ONU continues the sending of the uplink frame to the OLT.

At S714, when determining that the downlink optical signal sent by the OLT according to the uplink frame is received, the ONU stops the sending of the uplink frame to the OLT.

At S715, a conventional activation process is executed.

At S716, upon being powered on, the OLT first maintains a downlink optical signal disabled state, and detects whether the uplink frame sent by the ONU is received.

At S717, when detecting that the uplink frame sent by the ONU is received, the OLT sends a downlink optical signal to the ONU; otherwise, executes S718.

At S718, when detecting that the uplink frame sent by the ONU is not received, the OLT continues signal detection for the uplink frame from the ONU, until the OLT receives the uplink frame sent by the ONU, in which case the OLT sends a downlink optical signal to the ONU.

It should be noted that when determining that the downlink optical signal sent by the OLT is not received within the second time period after the uplink frame is sent, i.e., when determining that the SD signal generated by the downlink optical signal sent by the OLT is not received, the ONU continues the sending of the uplink frame to the OLT; and continues to detect whether the ONU currently receives the SD signal generated by the downlink optical signal sent by the OLT, and does not stop the sending of the uplink frame to the OLT until the ONU receives the SD signal.

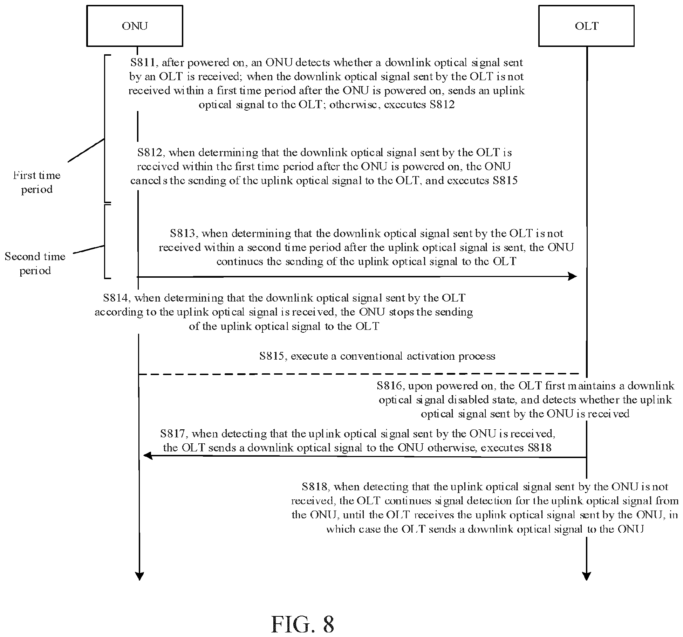

For example, referring to FIG. 8, a signal transmission method according to Embodiment Three of the present disclosure includes the following steps S811 to S818.

At S811, after powered on, an ONU detects whether a downlink optical signal sent by an OLT is received; when the downlink optical signal sent by the OLT is not received within a first time period after the ONU is powered on, sends an uplink optical signal to the OLT; otherwise, executes S812.

At S812, when determining that the downlink optical signal sent by the OLT is received within the first time period after the ONU is powered on, the ONU cancels the sending of the uplink optical signal to the OLT, and executes S815.

At S813, when determining that the downlink optical signal sent by the OLT is not received within a second time period after the uplink optical signal is sent, the ONU continues the sending of the uplink optical signal to the OLT.

At S814, when determining that the downlink optical signal sent by the OLT according to the uplink optical signal is received, the ONU stops the sending of the uplink optical signal to the OLT.

At S815, a conventional activation process is executed.

At S816, upon being powered on, the OLT first maintains a downlink optical signal disabled state, and detects whether the uplink optical signal sent by the ONU is received.

At S817, when detecting that the uplink optical signal sent by the ONU is received, the OLT sends a downlink optical signal to the ONU; otherwise, executes S818.

At S818, when detecting that the uplink optical signal sent by the ONU is not received, the OLT continues signal detection for the uplink optical signal from the ONU, until the OLT receives the uplink optical signal sent by the ONU, in which case the OLT sends a downlink optical signal to the ONU.

It should be noted that when determining that the downlink optical signal sent by the OLT is not received within the second time period after the uplink optical signal is sent, i.e., when determining that the SD signal generated by the downlink optical signal sent by the OLT is not received, the ONU continues the sending of the uplink frame to the OLT; and continues to detect whether the ONU currently receives the SD signal, and does not stop the sending of the uplink frame to the OLT until the ONU receives the SD signal.

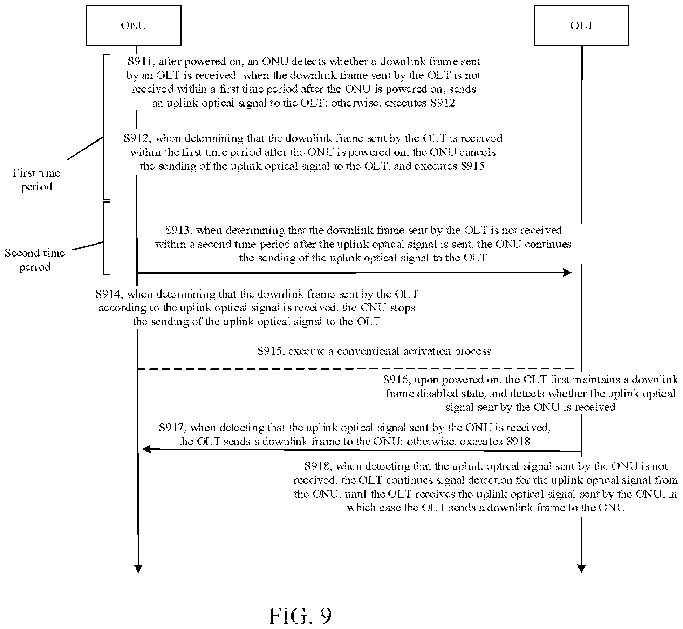

For example, referring to FIG. 9, a signal transmission method according to Embodiment Four of the present disclosure includes the following steps S911 to S918.

At S911, after powered on, an ONU detects whether a downlink frame sent by an OLT is received; when the downlink frame sent by the OLT is not received within a first time period after the ONU is powered on, sends an uplink optical signal to the OLT; otherwise, executes S912.

At S912, when determining that the downlink frame sent by the OLT is received within the first time period after the ONU is powered on, the ONU cancels the sending of the uplink optical signal to the OLT, and executes S915.

At S913, when determining that the downlink frame sent by the OLT is not received within a second time period after the uplink optical signal is sent, the ONU continues the sending of the uplink optical signal to the OLT.

At S914, when determining that the downlink frame sent by the OLT according to the uplink optical signal is received, the ONU stops the sending of the uplink optical signal to the OLT.

At S915, a conventional activation process is executed.

At S916, upon being powered on, the OLT first maintains a downlink frame disabled state, and detects whether the uplink optical signal sent by the ONU is received.

At S917, when detecting that the uplink optical signal sent by the ONU is received, the OLT sends a downlink frame to the ONU; otherwise, executes S918.

At S918, when detecting that the uplink optical signal sent by the ONU is not received, the OLT continues signal detection for the uplink optical signal from the ONU, until the OLT receives the uplink optical signal sent by the ONU, in which case the OLT sends a downlink frame to the ONU.

It should be noted that when determining that the downlink frame sent by the OLT is not received within the second time period after the uplink optical signal is sent, the ONU continues the sending of the uplink optical signal to the OLT; and continues to detect whether the ONU currently receives the downlink frame sent by the OLT, and does not stop the sending of the uplink optical signal to the OLT until the ONU receives the downlink frame sent by the OLT.

It should be noted that although the steps in the embodiments of the present disclosure are described in a particular order in the drawings, it should not be construed as requiring that these steps be performed in a particular or serial order as shown, or that all of the illustrated steps be performed to achieve a desired result. In a particular environment, multitasking and parallel processing may be advantageous.

An embodiment of the present disclosure provides an ONU, including: a first sending module, configured for sending an uplink detection signal to an OLT when not receiving a downlink signal from the OLT.

For example, the first sending module is further configured for: sending the uplink detection signal to the OLT when not receiving the downlink signal from the OLT within a first time period after the ONU is powered on.

For example, the first sending module is further configured for: canceling the sending of the uplink detection signal to the OLT when receiving the downlink signal from the OLT within the first time period after the ONU is powered on.

The ONU provided in the embodiment of the present disclosure further includes: a first receiving module, configured for detecting the downlink signal from the OLT within the first time period after the ONU is powered on, where the downlink signal includes at least one of: a downlink frame and a downlink optical signal.

For example, detecting the downlink signal from the OLT within the first time period after the ONU is powered on includes at least one of:
detecting the downlink frame from the OLT within the first time period after the ONU is powered on, and when the downlink frame from the OLT is detected, determining that the downlink signal from the OLT has been received within the first time period after the ONU is powered on; and
detecting an SD signal within the first time period after the ONU is powered on, and when detecting the SD signal, determining that the downlink signal from the OLT has been received within the first time period after the ONU is powered on, where the SD signal is generated by the ONU after receiving a downlink optical signal from the OLT.

For example, the first receiving module is further configured for: when detecting the downlink signal from the OLT within the first time period after the ONU is powered on, executing at least one of:
receiving a bandwidth allocation message sent by the OLT;
receiving a PLOAM message sent by the OLT; and
receiving an SN request message sent by the OLT.

For example, the uplink detection signal includes at least one of: an uplink frame and an uplink optical signal.

For example, the first sending module is further configured for: after sending the uplink detection signal to the OLT, stopping the sending of the uplink detection signal to the OLT, in response to receiving the downlink signal sent by the OLT according to the uplink detection signal.

For example, the first sending module is further configured for: after sending the uplink detection signal to the OLT, continuing the sending of the uplink detection signal to the OLT, when not receiving the downlink signal from the OLT within a second time period after the uplink detection signal is sent.

An embodiment of the present disclosure provides an OLT, including: a second sending module, configured for maintaining a downlink signal disabled state after power on, until an uplink detection signal from an ONU is received; and sending a downlink signal to the ONU when receiving the uplink detection signal from the ONU.

For example, the uplink detection signal includes at least one of: an uplink frame and an uplink optical signal.

For example, the OLT further includes a second receiving module, configured for: detecting an uplink frame from the ONU, and when detecting the uplink frame from the ONU, determining that the uplink detection signal from the ONU has been received.

For example, the second receiving module may be further configured for: detecting an SD signal, and when detecting the SD signal, determining that the uplink detection signal from the ONU has been received, where the SD signal is generated by the OLT after receiving an uplink optical signal from the ONU.

For example, sending a downlink signal to the ONU includes at least one of:
sending a downlink frame to the ONU;
sending a downlink optical signal to the ONU;
sending a bandwidth allocation message to the ONU;
sending a PLOAM message to the ONU; and
sending an SN request message to the ONU.

An embodiment of the present disclosure provides an optical network system, including an OLT and an ONU, where:
the ONU includes a first sending module, configured for sending an uplink detection signal to the OLT when not receiving a downlink signal from the OLT; and
the OLT includes a second sending module, configured for performing power on and detecting the uplink detection signal from the ONU; and sending a downlink signal to the ONU when receiving the uplink detection signal from the ONU.

It should be noted that in the embodiments of the present disclosure, the description in each embodiment has its own focus. For parts that are not detailed or set forth in one embodiment, reference may be made to the relevant descriptions in other embodiments.

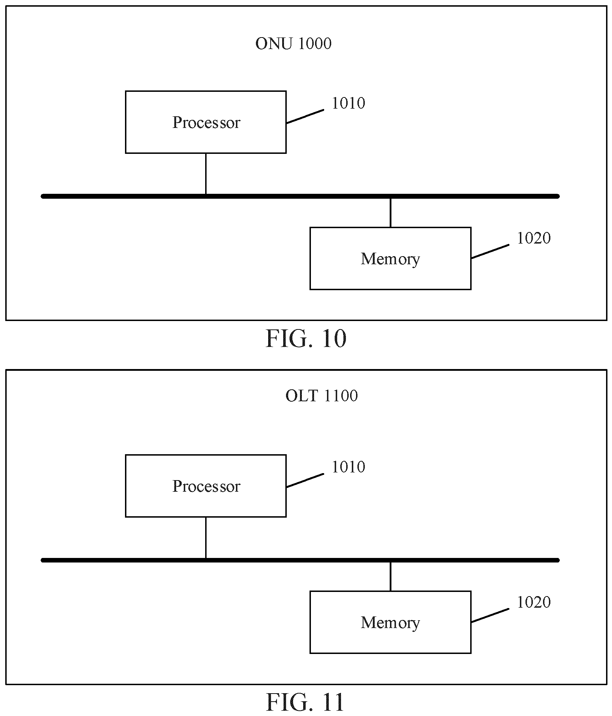

An embodiment of the present disclosure provides an ONU. As shown in FIG. 10, the ONU 1000 includes, but not limited to,
a processor 1010 and a memory 1020;
the memory 1020 stores program instructions which, when executed by the processor 1010, cause the processor 1010 to carry out the signal transmission method applied to an ONU according to any one of the above embodiments.

An embodiment of the present disclosure provides an OLT. As shown in FIG. 11, the OLT 1100 includes, but not limited to,
a processor 1010 and a memory 1020;
the memory 1020 stores program instructions which, when executed by the processor 1010, cause the processor 1010 to carry out the signal transmission method applied to an OLT according to any one of the above embodiments.

The processor 1010 and the memory 1020 may be connected by a bus or in other ways.

It can be understood that the processor 1010 may be a Central Processing Unit (CPU). The processor may also be a general-purpose processor, a Digital Signal Processor (DSP), an Application-Specific Integrated Circuit (ASIC), a Field Programmable Gate Array (FPGA), or other programmable logic device, discrete gate or transistor logic device, discrete hardware component, or the like. The general-purpose processor may be a microprocessor or any conventional processor or the like. Alternatively, the processor 1010 uses one or more integrated circuits for executing related programs to carry out the technical schemes provided in the embodiments of the present disclosure.

The memory 1020, as a non-transitory computer-readable storage medium, may be configured for storing a non-transitory software program and a non-transitory computer-executable program, for example, the signal transmission method described in any one of the embodiments of the present disclosure. The processor 1010 runs the non-transitory software program and the non-transitory computer-executable program stored in the memory 1020, to carry out the signal transmission method.

The memory 1020 may include a program storage area and a data storage area. The program storage area may store an operating system, and an application required by at least one function. The data storage area may store data and the like required for executing the signal transmission method. In addition, the memory 1020 may include a high-speed random access memory, and may also include a non-transitory memory, e.g., at least one magnetic disk storage device, flash memory device, or other non-transitory solid-state storage device. In some implementations, the memory 1020 optionally includes memories located remotely from the processor 1010, and the remote memories may be connected to the processor 1010 via a network. Examples of the network include, but not limited to, the Internet, an intranet, a local area network, a mobile communication network, and combinations thereof.

The non-transitory software program and instruction required to carry out the signal transmission method are stored in the memory 1020 which, when executed by one or more processors 1010, cause the one or more processors 1010 to carry out the signal transmission method according to any one of the embodiments of the present disclosure.

An embodiment of the present disclosure provides a computer-readable storage medium, storing program instructions which, when executed by a computer, cause the computer to carry out the signal transmission method according to any one of the above embodiments.

The computer-readable storage medium in the embodiment of the present disclosure may be any combination of one or more computer-readable media. The computer-readable medium may be a computer-readable signal medium or a computer-readable storage medium. For example, the computer-readable storage medium may include, but not limited to, an electrical, magnetic, optical, electromagnetic, infrared, or semiconductor system, apparatus, or device, or any combination thereof. Specific examples (non-exclusive list) of the computer-readable storage medium include: an electrical connection having one or more wires, a portable computer disk, a hard disk, a Random Access Memory (RAM), a Read-Only Memory (ROM), an Erasable Programmable Read-Only Memory (EPROM), a flash memory, an optical fiber, a portable Compact Disc Read-Only Memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device.

The computer-readable signal medium may include a data signal propagated in a baseband or as part of a carrier. The data signal carries computer-readable program code. Such a propagated data signal may be in a variety of forms including, but not limited to, an electromagnetic signal, an optical signal, or any suitable combination thereof. The computer-readable signal medium may also be any computer-readable medium other than a computer-readable storage medium, and may send, propagate, or transmit a program for use by or in combination with an instruction execution system, apparatus, or device.

The program code contained on the computer-readable medium may be transmitted using any suitable medium, including but not limited to, via wireless transmission, via a wire, via a fiber optic cable, via Radio Frequency (RF), etc., or any suitable combination thereof.

Computer program code for executing the steps of the present disclosure may be compiled in one or more programming languages or a combination of programming languages, including object-oriented programming languages such as Java, Smalltalk, and C++, and conventional procedural programming languages such as the "C" language or similar programming languages. The program code can be entirely executed on a user's computer, partly executed on the user's computer, executed as a separate software package, partly executed on the user's computer and partly executed on a remote computer, or entirely executed on a remote computer or server. **In** cases involving a remote computer, the remote computer may be connected to the user's computer via any type of network, including a Local Area Network (LAN) or a Wide Area Network (WAN), or may be connected to an external computer (e.g., via an Internet service provided by an Internet service provider).

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the scope defined by the claims of the present disclosure.

## Claims

1. A signal transmission method, applied to an Optical Network Unit (ONU), the method comprising:
sending an uplink detection signal to an Optical Line Terminal (OLT) in response to not receiving a downlink signal from the OLT.

2. The method of claim 1, wherein sending the uplink detection signal to the OLT comprises:
sending the uplink detection signal to the OLT in response to not receiving the downlink signal from the OLT within a first time period after the ONU is powered on.

3. The method of claim 2, further comprising:
canceling the sending of the uplink detection signal to the OLT in response to receiving the downlink signal from the OLT within the first time period after the ONU is powered on.

4. The method of claim 2 or 3, wherein before sending the uplink detection signal to the OLT, the method further comprises:
detecting the downlink signal from the OLT within the first time period after the ONU is powered on; and
the downlink signal comprises at least one of: a downlink frame and a downlink optical signal.

5. The method of claim 4, wherein detecting the downlink signal from the OLT within the first time period after the ONU is powered on comprises at least one of:
detecting the downlink frame from the OLT within the first time period after the ONU is powered on, and in response to the downlink frame from the OLT being detected, determining that the downlink signal from the OLT has been received within the first time period after the ONU is powered on; and
detecting a Signal Detect (SD) signal within the first time period after the ONU is powered on, and in response to the SD signal being detected, determining that the downlink signal from the OLT has been received within the first time period after the ONU is powered on, wherein the SD signal is generated by the ONU after receiving a downlink optical signal from the OLT.

6. The method of claim 3, wherein in response to the downlink signal from the OLT having been received within the first time period after the ONU is powered on, the method further comprises at least one of:
receiving a bandwidth allocation message sent by the OLT;
receiving a Physical Layer Operation Administration and Maintenance (PLOAM) message sent by the OLT; and
receiving a Serial Number (SN) request message sent by the OLT.

7. The method of claim 1, wherein the uplink detection signal comprises at least one of: an uplink frame and an uplink optical signal.

8. The method of claim 1, wherein after sending the uplink detection signal to the OLT, the method further comprises:
stopping the sending of the uplink detection signal to the OLT, in response to receiving the downlink signal sent by the OLT according to the uplink detection signal.

9. The method of claim 1, wherein after sending the uplink detection signal to the OLT, the method further comprises:
continuing the sending of the uplink detection signal to the OLT, in response to not receiving the downlink signal from the OLT within a second time period after the uplink detection signal is sent.

10. A signal transmission method, applied to an Optical Line Terminal (OLT), the method comprising:
maintaining a downlink signal disabled state after power on, until an uplink detection signal from an Optical Network Unit (ONU) is received; and
sending a downlink signal to the ONU in response to receiving the uplink detection signal from the ONU.

11. The method of claim 10, wherein the uplink detection signal comprises at least one of: an uplink frame and an uplink optical signal.

12. The method of claim 10 or 11, wherein the method further comprises at least one of:
detecting an uplink frame from the ONU, and in response to detecting the uplink frame from the ONU, determining that the uplink detection signal from the ONU has been received; and
detecting a Signal Detect (SD) signal, and in response to detecting the SD signal, determining that the uplink detection signal from the ONU has been received, wherein the SD signal is generated by the OLT after receiving an uplink optical signal from the ONU.

13. The method of claim 10, wherein sending a downlink signal to the ONU comprises at least one of:
sending a downlink frame to the ONU;
sending a downlink optical signal to the ONU;
sending a bandwidth allocation message to the ONU;
sending a Physical Layer Operation Administration and Maintenance (PLOAM) message to the ONU; and
sending a Serial Number (SN) request message to the ONU.

14. An Optical Network Unit (ONU), comprising:
a first sending module, configured for sending an uplink detection signal to an Optical Line Terminal (OLT) in response to not receiving a downlink signal from the OLT.

15. An Optical Line Terminal (OLT), comprising:
a second sending module, configured for maintaining a downlink signal disabled state after power on, until an uplink detection signal from an Optical Network Unit (ONU) is received; and sending a downlink signal to the ONU in response to receiving the uplink detection signal from the ONU.

16. An optical network system, comprising an Optical Line Terminal (OLT) and an Optical Network Unit (ONU), wherein:
the ONU comprises a first sending module, configured for sending an uplink detection signal to the OLT in response to not receiving a downlink signal from the OLT; and
the OLT comprises a second sending module, configured for performing power on and detecting the uplink detection signal from the ONU; and sending a downlink signal to the ONU in response to receiving the uplink detection signal from the ONU.

17. An Optical Network Unit (ONU), comprising:
a processor and a memory,
wherein the memory stores program instructions which, when executed by the processor, cause the processor to carry out the signal transmission method of any one of claims 1 to 9.

18. An Optical Line Terminal (OLT), comprising:
a processor and a memory,
wherein the memory stores program instructions which, when executed by the processor, cause the processor to carry out the signal transmission method of any of claims 10 to 13.

19. A computer-readable storage medium, storing program instructions which, when executed by a computer, cause the computer to carry out the signal transmission method of any of claims 1 to 9 or the signal transmission method of any of claims 10 to 13.
